Europäisches Patentamt

European Patent Office

Office européen des brevets

(19)

(11) Publication number : **0 473 681 B1**

(12) **EUROPEAN PATENT SPECIFICATION**

(45) Date of publication of patent specification :
27.12.95 Bulletin 95/52

(51) Int. Cl.⁶ : **G21B 1/00**

(21) Application number : **90908716.5**

(22) Date of filing : **14.05.90**

(86) International application number :
**PCT/SE90/00320**

(87) International publication number :
**WO 90/14669 29.11.90 Gazette 90/27**

(54) **PRODUCTION OF FUSION ENERGY**

(30) Priority : **19.05.89 SE 8901798**

(43) Date of publication of application :
**11.03.92 Bulletin 92/11**

(45) Publication of the grant of the patent :
**27.12.95 Bulletin 95/52**

(84) Designated Contracting States :
**DE FR GB IT**

(56) References cited :
**US-A- 2 728 877**
**US-A- 3 437 862**
**US-A- 4 759 894**
**US-A- 4 793 961**
**US-A- 4 836 972**
**US-A- 4 853 173**

(56) References cited :
**Research News, Vol., April 1989, ROBERT POOL: "Fusion Followup: Confusion Abounds", see page 27, column 1, line 35 - line 52.**
**L Recherche, Vol. 20, June 1989, CHRISTIAN AMATORE: "La fusion froide aura-t-elle lieu?", figure 1.**

(73) Proprietor : **AB TEKNISK UTVECKLING EHR**
**Drakskeppsvägen 41 B**
**S-183 63 TAEBY (SE)**

(72) Inventor : **HAEFFNER, Erik**
**Eskadervägen 8**
**S-183 54 Täby (SE)**

(74) Representative : **Lettström, Richard Wilhelm**
**H. Albihns Patentbyra AB,**
**Box 3137**
**S-103 62 Stockholm (SE)**

EP 0 473 681 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of generating energy from the fusion of light atomic nuclei, preferably isotopes of hydrogen, and an apparatus for performing the method.

Since many years considerable research has been pursued with the purpose of obtaining fusion of light nuclei, such as deuterons, d, protons, p, and tritons, t, to generate energy in a manageable form for industrial and other use.

This fusion research has primarily been concentrated on methods to obtain a magnetic containment of a plasma at a high enough temperature and with such a deuteron density, that a fusion reaction will occur according to the well-known reaction:

$$d + d = {}^3He\ (0,82\ MeV) + n\ (2,45\ MeV). \quad (I)$$

In spite of very considerable efforts this line of research has not yet definitively proved that it may result in an industrial process of energy conversion, primarily due to the fact that the necessary temperature and density of the plasma cannot be maintained for a sufficiently long time.

The probability that a fusion will occur in a plasma usually is described as a product, $T \times n \times \tau$, of the prevailing temperature $T(K)$, deuteron density $n$ $(g/m^3)$, and time $\tau$ in seconds. In a preferred apparatus according to the invention, the value of $T \times n \times \tau$ can be calculated to be high enough for fusion reactions to occur at a rate of interest for practical use.

Recently a possibility to obtain so-called "cold fusion", principally an electrolysis of heavy water with a palladium cathode and an anode of platinum or gold, has been proposed and tested - so far without conclusive results - see Journal of Electroanalytical Chemistry, 261 (1989), pages 301-308. Theoretically it was speculated that fusion reactions under such circumstances, after absorption of the heavy hydrogen gas in the Pd-metal and formation of $D_2$-molecules, might occur through the intermediation of so-called quasiparticles (muons) with one negative electron charge but with bigger mass than the electron mass. A muon with larger mass than the electron mass $m_e$ has the ability to bind deuterons d more close in the molecule $D_2$. It has been calculated that a muon with the mass $5\ m_e$ would decrease the distance between the d nuclei to about 0.15 Å. In this distance the repellant Coulomb potential is about 95 eV and the probability for a penetration through the potential barrier because of quantum mechanical tunnel effects is still low. The probability of tunnel effects would however increase considerably if the deuterons could be given a higher kinetic energy.

EP-A-0 393 465 (published on October 24, 1990) discloses a method for producing a plasma nuclear fusion wherein a gaseous material selected from the group of denterium and a denterium compound is introduced in the reaction vessel, whereby a nuclear fusion reaction is caused by activating the gaseous material.

According to the present invention a method and an apparatus according to claims 1 and 6, respectively, are provided.

The method according to the invention maximizes the probability of reactions d + d or p + d to such an extent that industrial energy production is feasible.

The invention will be described in detail below with reference to the accompanying drawings, in which:

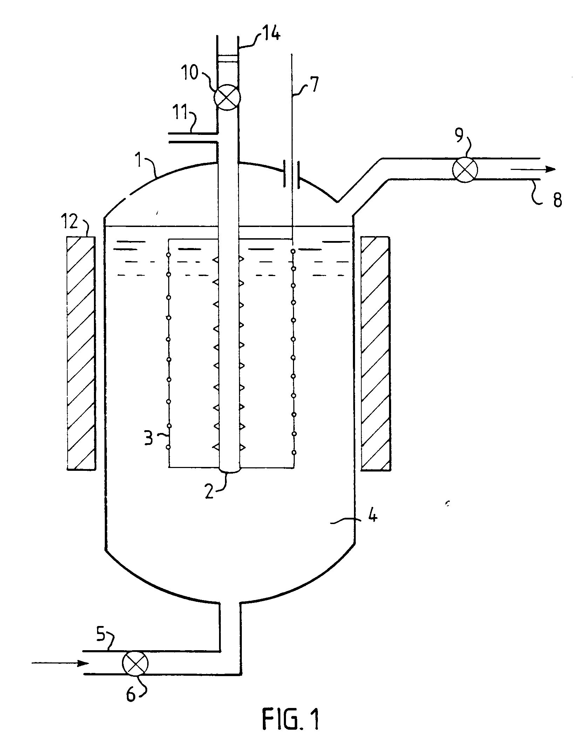

Figure 1 shows an apparatus according to the invention, and

Figure 2 shows an alternatively designed apparatus according to the invention.

In a tank (1) is provided an electrode system comprising a central electrode 2 in the shape of a rod or a pipe closed at its lower end and made of Pd or Ti, and an outer electrode 3 in the shape of a tubular net or a perforated plate of platinum. The tank is filled with an electrolyte 4, such as heavy water, $D_2O$, pure or mixed with $H_2O$, which is supplied by the conduit 5 with the valve 6.

The outer electrode 3 is connected to the positive pole of a high voltage source by an electrical cable 7 and the central electrode 2 is connected to the negative pole by a cable 14. The high voltage source, e.g. a condenser is discharged by an electric arc between the electrodes 2 and 3. The time of duration, energy delivery and frequency of the spark should be variable within wide limits. Depending on the geometry of the electrolytic cell an optimum adjustment of these variables is done at the same time as the neutron density in the environment of the tank is an indicator that fusion reactions occur.

The water will be heated and vaporized by the supplied energy and the fusion energy. At a suitable steam pressure the steam is led out through a conduit 8 with a valve 9 and led to the heat exchanger and condenser. Thereafter the water is returned to the tank through the conduit 5 with the valve 6.

The central electrode, the tubular cathode 2, is preferably provided with short projections or flanges so that the increased field strength there will promote the formation of discharge sites. The pipe 2 may first be evacuated and then closed by a valve 10. By coupling a branch pipe 11 to a vacuumeter penetrated deuterium is measured.

In an application of the invention the electrolyte consists of a 2 - 10 % by weight suspension in heavy water of magnetic particles e.g. magnetite, $Fe_3O_4$, of about 10 nm size. When a current flows through the plasma created by a spark or an electric arc in a high voltage discharge a magnetic field is formed which will considerably increase the apparent density around the plasma track. Thus the current itself will create a magnetic enclosure of the generated deuterons and other charged particles. This effect may be strengthened by surrounding the tank with a magnetic field, whereby the internal fluid pressure in the whole suspension $D_2O$ - $Fe_3O_4$ can be substantially increased. Of course this effect cannot resist the pressure from the generated steam, which rapidly escapes, but after that the deuteron generating reactions in the spark has occured.

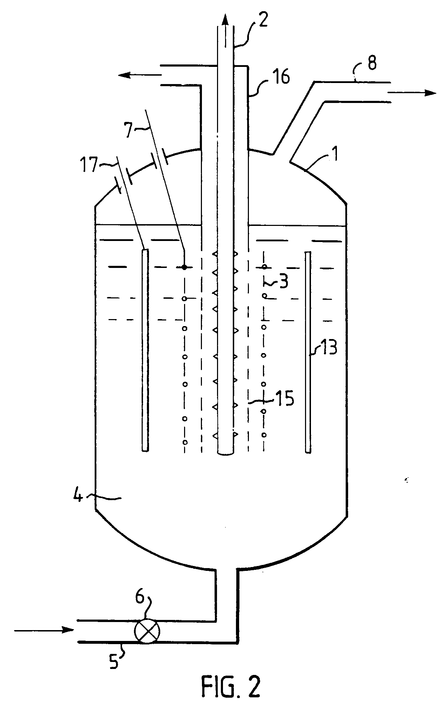

In a preferred embodiment of the invention (shown in Figure 2) the tank 1 is provided with a further electrode 13, functioning as the anode in an electrolytic cell wherein 2 is the cathode for the electrolytic decomposition of $D_2O$. The electrolyte 4 consists of $D_2O$ and an added acid e.g. $D_2SO_4$, or an alkalideuteroxide, e.g. LiOD or KOD. The anode material can be Pt, Ni, or any other material generally used in electrolytic cells for water electrolysis.

The cell voltage can be between 2 and 12 V and the concentration of dissolved substances in the heavy water is about 0,1 M , but both higher and lower concentrations may work. The apparent density can also in this case be increased by the addition of suspended magnetic particles of a chemical composition which does not react with the electrolyte.

By the continuous electrolysis the cathode 2 is always saturated with $D_2$ thereby increasing the probability of fusion reactions by incoming high energy deuterons generated by the high voltage discharge between the electrodes 2 and 3. In this embodiment of the electrode system a diaphragm 15 is inserted to collect and lead away the generated $D_2$ through the pipe 16.

High voltage for the electrical discharge in the fluid is applied through the conduit 7 and low voltage for the electrolysis is applied through the conduit 17 to the anode 13.

List of details:
1. Tank
2. Central electrode, cathode
3. Outer electrode for high voltage discharge
4. Electrolyte
5. Conduit
6. Valve
7. High voltage conduit
8. Steam conduit
9. Valve
10. Valve
11. Branch pipe
12. Magnetic field
13. Electrode
14. Low voltage conduit
15. Diaphragm.
16. Pipe for $D_2$
17. Low voltage conduit

**Claims**

1. Method for generating energy from fusion of hydrogen isotopes, comprising the following steps:

generating a plasma containing ions of hydrogen isotopes by a high voltage discharge between a cathode (2) made of Pd or Ti and an anode (3), said anode and said cathode being immersed in an electrolyte (4) of heavy water, pure or mixed with $H_2O$ and/or electrolytic additives, thereby accelerating said ions onto said cathode; continuously renewing a layer of atomic or chemically bound hydrogen isotopes on or in said cathode (3) by electrolysis; and

transferring the heat generated by the nuclear fusion reactions and supplied energy to water for use in known heat power processes.

2. Method according to claim 1, wherein a high voltage of preferably more than 20 kV is discharged through an electrical arc or spark between said cathode (2) and said anode (3) for the discharge, which is continuous or intermittent.

3. Method according to claim 2, wherein the heavy water is pressurized, preferably to about 10 MPa.

4. Method according to any of claims 2 and 3, wherein the heavy water, $D_2O$, contains a suspension of solid particles of a ferromagnetic material with a diameter of about 10 nm.

5. Method according to claim 2, wherein the discharge occurs in an electrolysis cell for decomposition of heavy water, the cathode thereby also being cathode for the discharge.

6. Apparatus for generating energy from fusion of hydrogen isotopes comprising a container (1) containing an electrolyte (4) of heavy water, pure or mixed with $H_2O$ and/or electrolytic additives; the container having an inlet (5) for electrolyte and an outlet (8) for steam with valves (6 and 9, respectively); a central cathode (2) which is made of Pd or Ti, contains or is covered by a layer of atomic or chemically bound hydrogen isotopes, and is shaped as a rod or a tube; an outer anode (3) surrounding the cathode, said cathode and said anode being immersed in the electrolyte; a high voltage source connected between said cathode and said anode for generating a plasma by a high voltage discharge between said anode and said cathode; and means for continuously renewing said layer on said cathode by electrolysis.

7. Apparatus according to claim 6, wherein said cathode is provided with flanges or short projections and wherein said anode, which can consist of platinum, is in the shape of a net or a perforated plate.

8. Apparatus according to any of claims 6 or 7, wherein a container (1), is filled with an electrolyte consisting of an alkali metal deutroxide, alternatively $D_2SO_4$ dissolved in the heavy water, $D_2O$, in which has been arranged an electrode system where a first electrode (2) with connection (14) forms cathode both for the discharge and for the electrolysis processes, while a second electrode (3) with inlet (7) forms high voltage anode and a third electrode (13) with inlet (17) forms anode at the electrolytic process, said cathode (2) being provided with flanges or projections, and a diaphragm (15) being arranged around the cathode (2).

**Patentansprüche**

1. Verfahren zur Energieerzeugung aus einer Fusion von Wasserstoffisotopen, umfassend die folgenden Schritte:

   Erzeugen eines Plasmas, welches Ionen von Wasserstoffisotopen enthält, durch eine Hochspannungsentladung zwischen einer aus Pd oder Ti bestehenden Kathode (2) und einer Andoe (3), wobei die Anode und die Kathode in einem Elektrolyt (4) aus schwerem Wasser, rein oder mit $H_2O$ und/oder elektrolytischen Zusätzen eingetaucht ist, wodurch die Ionen auf die Kathode hin beschleunigt werden; kontinuierliches Erneuern einer Schicht von atomischen oder chemisch gebundenen Wasserstoffisotopen auf oder in der Kathode (3) durch Elektrolyse; und

   Transferieren der durch die Atomkernfusions-Reaktionen erzeugten Wärme und der zugeführten Energie an Wasser zur Verwendung in bekannten Wärmeenergieprozessen.

2. Verfahren nach Anspruch 1, dadurch gekennzeichnet, daß eine Hochspannung von vorzugsweise größer als 20 kV durch einen elektrischen Bogen oder einen Funken zwischen der Kathode (2) und der Anode (3) für die Entladung, die kontinuierlich oder intermittierend ist, entladen wird.

3. Verfahren nach Anspruch 2, dadurch gekennzeichnet, daß das schwere Wasser vedichtet ist, vorzugsweise auf ungefähr 10 MPa.

4. Verfahren nach einem der Ansprüche 2 und 3, dadurch gekennzeichnet, daß das schwere Wasser $D_2O$ eine Lösung von Festkörperpartikeln eines ferromagnetischen Materials mit einem Durchmesser von ungefähr 10 nm enthält.

5. Verfahren nach Anspruch 2, dadurch gekennzeichnet, daß die Entladung in einer Elektrolysezelle zur Zersetzung von schwerem Wasser auftritt, wobei die Kathode dadurch auch eine Kathode für die Entladung ist.

6. Vorrichtung zur Energieerzeugung aus einer Fusion von Wasserstoffisotopen, umfassend einen Behälter (1), der ein Elektrolyt (4) aus schwerem Wasser, rein oder mit $H_2O$ und/oder elektrolytischen Zusätzen gemischt, enthält; wobei der Behälter mit einem Einlaß (5) für Elektrolyt und einem Auslaß (8) für Dampf mit Ventilen (6 bzw. 9) versehen ist; eine Mittenelektrode (2), die aus Pd oder Ti besteht, eine Schicht aus atomischen oder chemisch gebundenen Wasserstoffisotopen enthält oder damit bedeckt ist und die Form eines Stabs oder einer Röhre aufweist; eine äußere Elektrode (3) die die Kathode umgibt, wobei die Kathode und die Anode in das Elektrolyt eingetaucht sind; eine Hochspannungsquelle, die zwischen die Kathode und die Andode zum Erzeugen eines Plasmas durch eine Hochspannungsentladung zwischen der Kathode und der Anode gechaltet ist; und eine Einrichtung zum kontinuierlichen Erneuern der Schicht auf der Kathode durch Elektrolyse.

7. Vorrichtung nach Anspruch 6, dadurch gekennzeichnet, daß die Kathode mit Flanschen oder kurzen Vorsprüngen versehen ist und daß die Anode, die aus Platin bestehen kann, die Form eines Netzes oder einer perforierten Platte aufweist.

8. Vorrichtung nach einem der Ansprüche 6 oder 7, dadurch gekennzeichnet, daß ein Behälter (1) mit einem Elektrolyt gefüllt ist, bestehend aus Alkalimetall-Deutroxid, alterniv $D_2SO_4$ aufgelöst in dem schweren Wasser, $D_2O$, in dem ein Elektrodensystem angeordnet worden ist, wobei eine erste Elektrode (2) mit einer Verbindung (14) eine Kathode sowohl für die Entladung als auch für die Elektrolyseprozesse bildet, während eine zweite Elektrode (3) mit einem Einlaß (7) eine Hochspannungsanode bildet und eine dritte Elektrode (13) mit einem Einlaß (17) eine Anode bei dem elektrolytischen Prozeß bildet, wobei die Kathode (2) mit Flanschen oder Vorsprüngen versehen ist und eine Membran (15) um die Kathode (2) herum angeordnet ist.

**Revendications**

1. Procédé de création d'énergie à partir de la fusion d'isotopes de l'hydrogène, comprenant les étapes suivantes :

   la création d'un plasma contenant des ions d'isotopes de l'hydrogène par une décharge à haute tension entre une cathode (2) formée de Pd ou Ti et une anode (3), l'anode et la cathode étant immergées dans un électrolyte (4) formé d'eau lourde, pure ou mélangée à $H_2O$ et/ou à des adjuvants électrolytiques, si bien que les ions sont accélérés sur la cathode, le renouvellement constant d'une couche d'isotopes de l'hydrogène, sous forme atomique ou liée chimiquement, sur la cathode (3) ou à l'intérieur de celle-ci par électrolyse, et le transfert de la chaleur dégagée par les réactions de fusion nucléaire et de l'énergie fournie à l'eau afin qu'elle soit utilisée dans des processus générateurs de chaleur connus.

2. Procédé selon la revendication 1, dans lequel une haute tension, de préférence supérieure à 20 kV, est déchargée dans un arc électrique ou une étincelle formé entre la cathode (2) et l'anode (3) pour la décharge qui est continue ou intermittente.

3. Procédé selon la revendication 2, dans lequel l'eau lourde est sous pression, de préférence d'environ 10 MPa.

4. Procédé selon l'une quelconque des revendications 2 et 3, dans lequel l'eau lourde, $D_2O$, contient une suspension de particules solides d'une matière ferromagnétique ayant un diamètre d'environ 10 nm.

5. Procédé selon la revendication 2, dans lequel la décharge se produit dans une cellule d'électrolyse assurant la décomposition de l'eau lourde, la cathode étant aussi la cathode utilisée pour la décharge.

6. Appareil de création d'énergie à partir de la fusion d'isotopes de l'hydrogène, comprenant un récipient (1) qui contient un électrolyte (4) d'eau lourde, pure ou mélangée à $H_2O$ et/ou à des adjuvants électrolytiques, le récipient ayant une entrée (5) pour l'électrolyte et une sortie (8) pour la vapeur d'eau, qui sont munies de soupapes (6 et 9 respectivement), une cathode centrale (2) qui est formée de Pd ou Ti contient des isotopes de l'hydrogène, sous forme atomique ou liée chimiquement, ou est recouverte d'une couche de tels isotopes, et elle a la configuration d'une barre ou d'un tube, une anode externe (3) entourant la cathode, la cathode et l'anode étant immergées dans l'électrolyte, une source de haute tension connectée entre la cathode et l'anode et destinée à créer un plasma par décharge à haute tension entre l'anode et la cathode, et un dispositif destiné à renouveler constamment la couche formée sur la cathode par électrolyse.

7. Appareil selon la revendication 6, dans lequel la cathode a des flasques ou de courtes saillies, et l'anode, qui peut être formée de platine, est sous forme d'une grille ou d'une plaque perforée.

8. Appareil selon l'une quelconque des revendications 6 et 7, dans lequel un récipient (1) est rempli d'un électrolyte contenant un deutéroxyde alcalin ou $D_2SO_4$ dissous dans de l'eau lourde, $D_2O$, dans lequel a été placé un ensemble d'électrodes dans lequel une première électrode (2) ayant une connexion (14) forme une cathode à la fois pour la décharge et pour les processus d'électrolyse alors qu'une seconde électrode (3), ayant une entrée (7), forme une anode à haute tension, et une troisième électrode (13), ayant une entrée (17), forme une anode pour le processus électrolytique, la cathode (2) ayant des flasques ou des saillies, et un diaphragme (15) est disposé autour de la cathode (2).

FIG. 1

FIG. 2